# EUROPEAN PATENT APPLICATION

(11) **EP 4 806 864 A1**
(43) Date of publication of application: **16.09.2026**
(21) Application number: 25163022.4
(22) Date of filing: 11.03.2025
(51) Int. Cl.: C04B 28/06, B28B 1/50, C04B 38/02, E04C 1/41

(54) **CAVITY FILLING WITH MINERAL FOAMS**

(71) Applicant: Sika Technology AG, 6340 Baar (CH)
(72) Inventor: KOCH, Lukas, 83308 Trostberg (DE); MOHRI, Nils, 86159 Augsburg (DE); WELSCH, Richard, 83308 Trostberg (DE)
(74) Representative: Sika Patent Attorneys

(57) **Abstract**

The invention relates to a method for filling cavities in water-absorbing materials, especially in clay bricks, with an expanded mineral binder composition or for filling cavities in non-water-absorbing materials where the cavity is oriented non-horizontally, especially in supports such as columns, with an expanded mineral binder composition, and to a device for filling such cavities.

## Description

### Technical field

The invention relates to a method for filling cavities in water-absorbing materials, especially in clay bricks, with an expanded mineral binder composition or for filling cavities in non-water-absorbing materials where the cavity is oriented non-horizontally, especially in supports such as columns, with an expanded mineral binder composition, and to a device for filling such cavities.

### Background art

Certain types of cavities in structural elements present challenges when it comes to ensuring complete and stable filling. This includes cavities in water-absorbing building materials, such as clay bricks, as well as non-horizontal cavities, such as those found in walls or sloped beams. According to state of the art, suitable fillers include (i) perlite spheres bonded with waterglass, (ii) expanded polystyrene (EPS) or extruded polystyrene (XPS) beads, or (iii) sticks made from mineral wool.

Each of these filling solutions comes with its own drawbacks. When cavities of clay bricks are filled with mineral wool, EPS or XPS beads, the result is a composite material that is difficult to recycle efficiently. Additionally, untreated polystyrene is flammable, posing a potential fire hazard. Mineral wool, on the other hand, is manufactured at temperatures exceeding 1400 °C, leading to substantial energy consumption and associated CO₂ emissions. Furthermore, modern clay brick designs feature increasingly smaller cavities, making it impractical to automatically insert mineral wool sticks. As for perlite, a primary drawback is its lower thermal insulation performance compared to other materials, leading to reduced overall energy efficiency when used as a filler.

To address the drawbacks of these solutions, mineral foams can be used. Such foams can be inserted into brick cavities in three ways: (i) using mineral foam sticks made from already hardened and dried foam, (ii) filling the cavities with a mechanically foamed mineral material in a continuous process, or (iii) using a chemically foamed mineral material that expands inside the cavity. However, each of these methods has inherent drawbacks. Mineral foam sticks face the same issue as mineral wool sticks in that they cannot be inserted into very small cavities. Additionally, they are typically brittle, making handling and insertion even more difficult. Chemically foamed mineral material is also problematic because the ultra-dry clay bricks absorb water from the suspension, leading to an incomplete foaming process that negatively affects both the foam structure and the properties of the brick itself. Mechanically foamed mineral material absorbs less water than chemically foamed foam, but water transfer from the foam into the brick still occurs. This water loss leads to localized foam shrinkage at the contact area, reducing adhesion between the foam and the brick. As a result, the foam may detach, reducing the overall thermal insulation performance and potentially falling out of the cavities if the bricks are cut on-site.

Chemical foaming of mineral foams is known in the art and disclosed in, for example, WO 2018/162381 (Construction Research & Technology GmbH, DeCavis AG), whereas mechanical foaming is described in WO 2013/150148 (Lafarge SA). The problem of filling cavities, especially in lightweight concrete, is addressed by EP3126588B1 (Lafarge SA), which teaches the use of cement with an aluminium oxide content of less than 20% by weight of the dry compound to fill cavities [0019]. However, this approach is limiting because it only allows control over the composition of the mineral foam, unlike methods that permit the use of any composition depending on the filling technique or device. Another approach to address the problem of dimensional instability of the mineral slurry is presented in EP4176967 A1 (Fixit Trockenmörtel). This patent application teaches a mixing process for a mineral foam which already assumes a dimensionally stable structure upon exiting a conveying or mixing device and is especially suitable for non-horizontal support structures [0011].

Therefore, there is still a need for improved methods of filling cavities in water-absorbing materials with an expanded mineral binder composition or in non-water-absorbing materials where the cavity is oriented non-horizontally, especially in clay bricks or vertical supports such as columns, with the expanded mineral binder composition.

### Disclosure of the invention

It is an object of the present invention to provide an improved method for filling cavities in water-absorbing materials with an expanded mineral binder composition or for filling cavities in non-water-absorbing materials where the cavity is oriented non-horizontally with expanded mineral binder composition. The method ensures complete cavity filling without shrinkage or detachment and results in strong adhesion between said expanded mineral binder composition and the water-absorbing material or non-water-absorbing material of a non-horizontally oriented cavity.

It is another object of the present invention to provide a device that enables cavity filling in water-absorbing materials with an expanded mineral binder composition or in non-water-absorbing materials where the cavity is oriented non-horizontally in this manner.

Surprisingly, it was found that these objects can be achieved by the subject-matter of independent claims. It is thus at the core of the present invention to fill the cavities of water-absorbing materials with an expanded mineral binder composition or to fill the cavities of non-water-absorbing materials where the cavity is oriented non-horizontally with an aqueous slurry having a certain degree of volumetric expansion. Such slurry is herewith called inter-expanded slurry.

In the context of this invention, "inter-expanded slurry" (IES) refers to an intermediate stage of volumetric expansion between the original aqueous slurry (2) and the fully expanded foamed mineral binder composition (10). It represents a partially expanded state where the slurry has undergone some degree of foaming after the expansion agent has been added to the aqueous slurry but has not yet reached its final expanded form.

Particularly preferred is the inventive method, wherein the **IES** reaches between 50 and 90%, especially between 70 and 85%, of the totally volume of the expanded mineral binder composition.

In this context, "total volume of the expanded mineral binder composition" refers to the final volumetric increase of the aqueous slurry from its original state (2) to the fully expanded form of the foamed mineral binder composition (10). In other words, the term "total volume of the expanded mineral binder composition" corresponds to the "total volumetric expansion of the aqueous slurry".

This inventive method results in the cavities of water-absorbing materials or of non-water-absorbing materials where the cavity is oriented non-horizontally being completely filled with the expanded mineral binder composition, without any cracking, shrinking or collapse of the mineral binder composition.

Further aspects of the present invention are subject of further independent claims and/or outlined throughout the description and the dependent claims.

### Ways of carrying out the invention

In a first aspect, the present invention relates to a method for filling cavities in water-absorbing materials with an expanded mineral binder composition or for filling cavities (8) in non-water-absorbing materials where the cavity (8) is oriented non-horizontally with an expanded mineral binder composition, said method comprising the steps of:
a) Providing an aqueous slurry (2) comprising at least one mineral binder and at least one expansion agent;
b) Pumping the aqueous slurry of step (a) through at least one hose (7), whereby expansion occurs and an inter-expanded slurry **IES** is formed;
c) Filling cavities (8) in the water-absorbing material or non-water-absorbing material where the cavity (8) is oriented non-horizontally with the **IES;**
d) Allowing the **IES** (9) to fully expand and optionally to harden inside the cavities (8) to form the expanded mineral binder composition;
wherein the **IES** (9) in step (b) expands to between 50 and 95%, preferably between 70 and 85%, of the total volume of the expanded mineral binder composition.

"Cavity", in the present context, is defined as a hollow space, void, or structural crack within a material, which may be located either on its the surface or internally. The cavity might have walls that are designed to come into contact with or be filled by another material, such as expanded mineral binder composition. The dimensions of a cavity generally range from 1 mm to 40 cm, with preferred dimensions between 2 mm and 30 cm.

According to the present invention, the cavity of water-absorbing material can be oriented in any direction, for example horizontally, i.e. parallel to the horizontal plane, vertically, i.e. perpendicular to the horizontal plane, or in an intermediate position between the two. Preferably, the cavity of water-absorbing material is oriented horizontally. According to another preferred embodiment, the cavity of water-absorbing material is oriented non-horizontally.

Furthermore, the method of the present invention can be used for filling cavities in non-water-absorbing materials where the cavity is oriented non-horizontally. A non-horizontally oriented cavity refers to a cavity that is not aligned parallel to the horizontal plane. In other words, it is tilted, slanted, or even fully vertical.

Preferably, the cavity in the non-water-absorbing material is oriented vertically, i.e. perpendicular to the horizontal plane. Such vertically oriented cavity can be located in a non-horizontal support structure, for example in a hollow aluminium profile standing upright. According to the present invention, a non-horizontal support structure refers to a structural element that is not aligned parallel to the horizontal plane, and can be inclined, vertical, or angled to support loads in various directions.

Within the present context, the terms "expanded mineral binder composition" and "mineral foam" are used interchangeably. A mineral foam is a two-phase or three-phase system. Thereby, one phase is gaseous, one phase is solid, and optionally a liquid phase is additionally present. The gaseous phase is present as fine gas bubbles separated by cell walls thereby forming a cell structure. The cell walls are the solid phase and are obtained by the curing reaction of mineral binders with water. The content of the gaseous phase in the mineral foam can vary in a range from 20 to 99% or 20 to 98% by volume, preferably from 50 to 98% by volume. Water may be additionally present as a liquid phase.

Mineral foams can be present in a wet form. Wet mineral foams contain a significant amount of water, and typically the mineral binder is not cured or not fully cured. For example, a wet mineral foam can contain water in a weight ratio of water to solids between 0.4 - 2.0, preferably 1.0 - 1.6.

Mineral foams can be present in a dry form. Dry mineral foams contain no water or small amounts of water, and the mineral binder is at least partly, especially fully cured. Water present in particular is water adsorbed to cured mineral surface of cell walls. It is preferred that a dry mineral foam contains not more than 5 wt. %, especially not more than 1 wt. %, relative to the total weight of the dry mineral foam, of water.

Mineral foams can be open-cell foams or closed-cell foams. In closed-cell foams, the gas is completely surrounded by the cell wall. Typically, at the same density, closed-cell foams are more robust than open-cell foams. Accordingly, closed-cell foams are preferred within the present context due to improved thermal insulation properties. Air becomes entrapped in closed-cell foams, whereas in open-cell foams, air can pass through depending on the size of the pore openings.

A mineral binder, in the context of the present invention, is a binder, which in the presence of water reacts in a hydration reaction to form solid hydrates or hydrate phases. This can be, for example, a hydraulic binder (e.g. cement or hydraulic lime), a latent hydraulic binder (e.g. slag), a pozzolanic binder (e.g. fly ash), a nonhydraulic binder (gypsum plaster or white lime), or a mixture thereof.

Cements preferably are selected from Portland cements according to according to standard EN 197-1:2011, alumina cement, especially alumina cement according to standard EN 14647:2005, calcium sulphoaluminate cement, or mixtures thereof.

Within the present context, the Portland cement, also called Ordinary Portland Cement (OPC), is a CEM I under standard EN 197-1:2011. However, other OPC classified, for example, under the relevant ASTM, JIS or Chinese standards is also suitable.

A calcium sulfoaluminate cement (CSA cement) of the present invention is a cement made of clinker that comprises ye'elimite (Ca₄(AlO₂)₆SO₄, also written C₄A₃$ in a cement chemist's notion) as a main mineral phase. CSA cement of the present invention typically comprises other phases selected from aluminates (CA, C₃A, C₁₂A₇), belite (C₂S), ferrites (C₂F, C₂AF, C₄AF), ternesite (C₅S₂$) and calcium sulfate. According to particular embodiments, CSA of the present invention contains 25-75% by weight of ye'elimite, 0-10% by weight of aluminates, 0-70% by weight of belite, 0-35% by weight of ferrites, and 0-20% by weight of ternesite, in each case based on the total dry weight of the CSA cement.

A calcium aluminate cement (CAC) of the present invention preferably is a cement according to standard EN 14647:2006-01. However, a calcium aluminate cement of the present invention may also be an amorphous material mainly composed of amorphous calcium aluminate phases.

Pozzolans and latent hydraulic binders preferably are selected from slag, especially blast furnace slag or basic oxygen slag, clay, calcined clay, especially metakaolin, kiln dust, microsilica, fly ash, pyrogenic silica, precipitated silica, silica fume, zeolite, rice husk ash, burnt oil shale, natural pozzolane such as pumice and trass, or mixtures thereof.

Pozzolans can be natural pozzolans and/or synthetic pozzolans. Pozzolanic materials, within the present context, are the materials as defined in the standard EN 197-1:2011.

Calcium sulfate preferably is selected from anhydrite, calcium sulfate hemihydrate, calcium sulfate dihydrate, or mixtures thereof.

According to embodiments, the mineral binder comprises calcium sulfoaluminate cement (CSA cement).

According to preferred embodiments, the mineral binder comprises at least 5 wt. %, preferably at least 12 wt. % of CSA cement relative to the total dry weight of the dry components of the slurry.

According to further preferred embodiments, the mineral binder comprises CSA cement and at least one pozzolans and/or latent hydraulic binder.

According to further preferred embodiments, the mineral binder comprises ordinary Portland cement.

According to further preferred embodiments, the mineral binder comprises calcium aluminate cement (CAC).

"Expansion", within the present context, corresponds to "foaming". Therefore, "expansion agent" can be used interchangeably with "foaming agent".

In the context of expanded mineral binder composition, "expansion" refers to the process in which a gas-forming agent, i.e. expansion agent, is introduced into an aqueous slurry, causing the generation of gas bubbles through a chemical reaction. These bubbles create a foam structure within the slurry, resulting in an increase in volume (also called "expansion" or "foaming") and the formation of a porous material. This porous material is an expanded mineral binder composition.

An expansion agent is a material that evaporates, decomposes, or reacts with water and/or an acid, to liberate gas. Non-limiting examples of foaming agents are peroxides, such as hydrogen peroxide, dibenzylperoxide, peroxobenzoic acid, peroxoacetic acid, alkali metal peroxides, perchloric acid, peroxomonosulfuric acid, dicumyl peroxide or cumyl hydroperoxide; isocyanates; carbonates and bicarbonates, such as CaCO₃, Na2CO₃, and NaHCO₃, which are preferably used in combination with an acid, e.g. a mineral acid; metal powders, such as aluminum powder; azides, such as methylazide; hydrazides, such as p toluenesulfonylhydrazide; hydrazine. The foaming agent preferably is present in dissolved or dispersed form, especially in the form of an aqueous solution.

According to embodiments, the slurry comprises an expansion agent selected from hydrogen peroxide, aluminium powder, a solution of alkaline peroxide, a solution of organic peroxide, preferably hydrogen peroxide.

According to embodiments, organic peroxide is peroxoacetic acid and/or peroxobenzoic acid.

According to embodiments, the water-absorbing materials are characterized by water absorption of at least 10%, preferably at least 15%, most preferably at least 20%, determined according to DIN EN 772-7:1998.

According to embodiments, the water-absorbing materials are selected from clay bricks, hollow concrete blocks, porous ceramic blocks, aerated concrete and/or natural stone blocks.

The expansion to reach the total volume of the expanded mineral binder composition takes a few minutes. When filling cavities in water-absorbing materials using conventional chemical foaming, water is absorbed during expansion. However, the amount of water in the aqueous slurry is precisely measured to match the required amount for the total expansion. As a result, the total volume of the expanded mineral binder composition cannot be achieved.

The advantage of the present invention is that expansion already begins in the hose (7) and, optionally, in the homogenization chamber (6), resulting in the formation of **IES.** Additionally, water migration is increasingly hindered as expansion continues, making it more difficult for water to move from the inner region of the foam of the expanded material in the cavity to the water-absorbing material surrounding the **IES.** This is due to the continuous formation of air bubbles, which obstruct the movement of water and, most likely, create capillary pressure that helps retain water within the structure.

The described advantage of the present invention also shortens the expansion time inside the cavity, thereby reducing the water-absorption time of the water-absorbing material compared to conventional foaming.

The described advantage of the present invention also shortens the expansion time inside the cavity, thereby minimizing the impact of gravitational forces on the **IES** in non-horizontal orientations.

According to embodiments, the method of the present invention can also relate to insulating a non-horizontally oriented structure with an expanded mineral binder composition, said method comprising the steps of:
a) Providing an aqueous slurry comprising at least one mineral binder and at least one expansion agent;
b) Pumping the aqueous slurry of step (a) through at least one hose, whereby expansion occurs and an inter-expanded slurry **IES** is formed;
c) Applying the **IES** onto a non-horizontally oriented structure;
d) Allowing the **IES** to fully expand and optionally to harden on the non-horizontally oriented structure to form the expanded mineral binder composition;
wherein the **IES** in step (b) expands to between 50 and 95%, preferably between 70 and 85%, of the total volume of the expanded mineral binder composition.

According to embodiments, said non-horizontally oriented structure can be a non-horizontally oriented fiber cement panel.

The insulation of such non-horizontally oriented structures is currently only possible using mechanical foaming, with all its drawbacks listed above in the "Background art" section. Therefore, the method of the present invention provides improved insulation method of the non-horizontally oriented structures with the expanded mineral binder composition.

According to embodiments, the degree of expansion is controlled by a pump rate of the **IES,** a total volume of the adherent tubes and/or the amount of a catalyst.

According to preferred embodiments, the degree of expansion is controlled by a pump rate of the **IES,** a total volume of the homogenization chamber and the adherent tubes and/or the amount of a catalyst.

The expression "pump rate" relates to the volumetric flow rate of dosing equipment used for providing the respective constituent to production equipment. Thereby, the expression "pump rate" is correlated to the volume of material dosed per unit of time. In particular, the pump rate of constituents is provided relative to the pump rate of other constituents. Therefore, 100% relative pump rate means that the dosing pumps operate to dose equal volumes of constituents per unit of time.

The gas phase present in the foam can be introduced by mechanical, physical or chemical foaming. Chemical foaming can be facilitated by the use of a catalyst. A catalyst is a compound suitable to catalyze the decomposition, and thereby gas formation, of an expansion agent. Suitable catalysts preferably comprise Mn²⁺, Mn⁴⁺, Mn⁷⁺ or Fe³⁺ cations. Alternatively, the enzyme catalase may be used as catalyst. Non-limiting examples of suitable catalysts are MnO₂ and KMnO₄. Such catalysts are preferably used in combination with peroxide expansion agents.

According to embodiments, the slurry comprises a catalyst selected from manganese dioxide, iron oxides, cobalt oxides, nickel oxides, copper oxides, iron (III) chloride, preferably manganese dioxide.

According to embodiments, the catalyst may be used in an amount of from 0.01 to 5 wt. %, preferably from 0.01 to 2 wt. %, more preferably from 0.05 to 1.0 wt. % and in particular from 0.1 to 0.6 wt. %, based on to total amount of foam formulation.

According to embodiments, the method of the present invention additionally comprises a step (a.1) between the steps (a) and (b), wherein the step (a.1) comprises mixing the slurry of step (a) inside a homogenization chamber to obtain a pre-expanded slurry **PES,** wherein the **PES** reaches at least 10%, preferably at least 30%, of the total volume of the expanded mineral binder composition, and wherein the **PES** has a lower expansion than the **IES.**

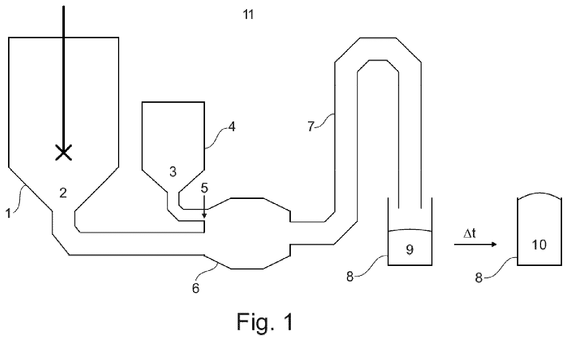

Fig. 1 is a diagram illustrating an exemplary embodiment of a device (11) for implementing the method according to the invention. As shown in the example in Fig. 1, the dry premix comprising at least one mineral binder is filled into the stirrer (1). Subsequently, the water is added and, upon mixing, the aqueous slurry (2) is formed. To initiate the expansion process, the solution of the expansion agent (3) is dosed from the expansion agent feeder (4) to the homogenization chamber (6). The slurry comprising the expansion agent is pumped through at least one hose (7), whereby an inter-expanded slurry (**IES**) is formed. Once the **IES** reaches between 50 and 90%, preferably between 70 and 85%, of the total volume of the expanded mineral binder composition, it fills the cavity of water-absorbing material (9). The **IES** is then allowed to fully expand and optionally to harden inside the cavity (10).

The degree of expansion is controlled either by the device of the present invention, i.e. by the pump rate of the **IES** and/or the total volume of the homogenization chamber (6) and/or the hose (7), or by the composition of the aqueous slurry, i.e. by the amount of a catalyst added.

According to the preferred embodiment, the solution of the expansion agent (3) is first dosed into the homogenization chamber (6), where it is homogenized with the slurry (2) before entering the hose (7). As a result, a pre-expanded slurry **PES** is formed, achieving at least 10%, preferably at least 30%, of the total volume of the expanded mineral binder composition, while exhibiting a lower expansion than the **IES.**

To reduce water absorption, the surface of the cavities in water-absorbing materials, such as clay bricks, can be treated with hydrophobizing agents. This allows for complete volume of the expanded mineral binder composition. However, this also weakens the adhesion between the expanded mineral binder composition and the cavity of the clay brick, making it more likely for the composition to detach and fall out when the brick is later handled. Additionally, hydrophobizing the surface introduces an extra step in the production process.

According to embodiments, the mixing of the aqueous slurry is done in a colloidal mixer, a static mixer, a pan mixer, a drum mixer, and/or a planetary mixer, preferably in a colloidal mixer.

According to embodiments, the pumping speed is between 0.1 and 50 dm³/min, preferably between 0.5 and 5 dm³/min.

According to embodiments, the cavities are completely filled with the fully expanded and hardened mineral binder composition of the step (d).

All features and embodiments as described above, also apply to this aspect.

In another aspect the present invention relates to a material having at least one filled cavity, wherein the at least one filled cavity is obtainable by the method described above.

Said at least one cavity can be selected from the cavities of clay bricks, hollow concrete blocks, porous ceramic blocks, aerated concrete and/or natural stone blocks.

According to embodiments, the at least one cavity is completely filled with the fully expanded and hardened mineral binder composition of the step (d) described above.

According to embodiments, the dry density of the expanded and hardened mineral binder composition is between 20 to 200 g/m³, preferably between 30 to 150 g/m³, most preferably between 40 to 60 g/m³.

The final density of the foam is controlled by weight ratio of aqueous slurry and expanding agent which may be calculated by a suitable dosing algorithm.

All features and embodiments as described above, also apply to this aspect.

In another aspect the present invention relates to the use of a building material with filled cavities obtained by a method as described above for thermal insulation, acoustic insulation, sound absorption, fire protection and/or construction.

All features and embodiments as described above, also apply to this aspect.

In another aspect the present invention relates to a device (11) for filling cavities (8) in water-absorbing materials with an expanded mineral binder composition or for filling cavities (8) in non-water-absorbing materials where the cavity (8) is oriented non-horizontally with an expanded mineral binder composition (10) according to the method of the present invention, comprising a stirrer (1) for an aqueous slurry (2), an expansion agent feeder (4), optionally, a homogenization chamber (6), and at least one hose (7) adapted to transport the aqueous slurry and an inter-expanded slurry **IES** (9) into a cavity, wherein the hose (7) has a volume between 1 and 20 dm³, preferably between 1 and 10 dm³, more preferably 1 and 5 dm³, wherein the volume is determined by the inner diameter of the hose.

According to embodiments, the present invention also relates to a device (11) for insulating a non-horizontally oriented structure with an expanded mineral binder composition as described above, comprising a stirrer (1) for an aqueous slurry (2), an expansion agent feeder (4), optionally, a homogenization chamber (6), and at least one hose (7) adapted to transport the aqueous slurry and an inter-expanded slurry **IES** to the surface of a non-horizontally oriented structure and apply it, for example by spraying, onto the surface of the non-horizontally oriented structure, wherein the hose (7) has a volume between 1 and 20 dm³, preferably between 1 and 10 dm³, more preferably 1 and 5 dm³, wherein the volume is determined by the inner diameter of the hose.

All features and embodiments as described above, also apply to this aspect.

### Brief description of the figures

- Fig. 1: is a diagram illustrating an exemplary embodiment of a device for implementing the method according to the invention (hybrid chemical foaming)
- Fig. 2: is a photo illustrating a brick cavity filled with the expanded mineral binder composition according to the non-inventive method (state-of-the-art chemical foaming)
- Fig. 3: is a photo illustrating a brick cavity filled with the expanded mineral binder composition according to the non-inventive method (filling cavities with pre-made mineral foam sticks)
- Fig. 4: is a photo illustrating a brick cavity filled with the expanded mineral binder composition according to the method of the present invention (hybrid chemical foaming)

### Reference list

- 1: Stirrer
- 2: Slurry
- 3: Expansion agent (solution)
- 4: Expansion agent feeder
- 5: Start of expansion
- 6: Homogenization chamber
- 7: Hose
- 8: Cavity
- 9: Inter-expanded slurry **IES**
- 10: Fully expanded and, optionally, hardened slurry
- 11: Device

### Exemplary embodiments

### General method - Reference example Ref-1

To produce the comparative mineral foams, the foaming powder was first dispersed in water. Then, a dry mix comprising calcium sulfoaluminate cement (CSA), calcium sulfate anhydride, pozzolans, admixtures and catalyst was added to prepare an aqueous suspension. After 5 min of stirring, the foaming of the suspension was initiated by adding hydrogen peroxide. The so obtained slurry was directly placed inside the brick cavity, where the foam was allowed to fully expand until the decomposition of hydrogen peroxide was completed.

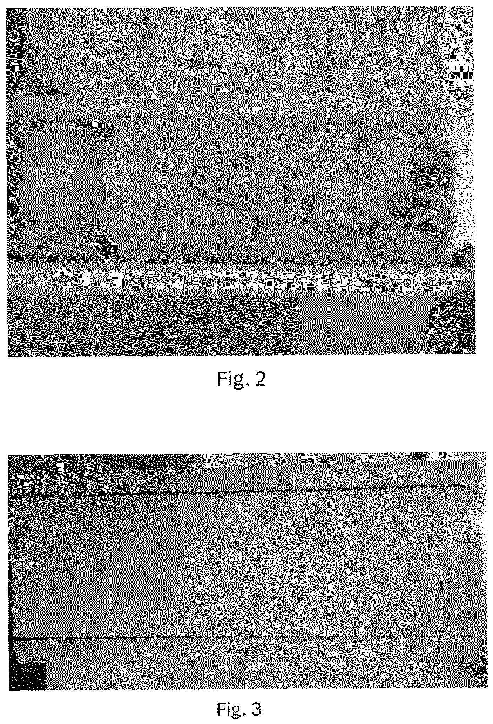

The brick filled with mineral foam was left overnight to allow a proper setting. The next day the brick was cut in half along its cross-section (Fig. 2).

### General method - Inventive example F-1

To produce the mineral foams according to the present invention, the foaming powder was first dispersed in water. Then, a dry mix comprising calcium sulfoaluminate cement (CSA), calcium sulfate anhydride, pozzolans, admixtures and catalyst was added to prepare an aqueous suspension. After 5 min of stirring, the foaming of the suspension was initiated by adding hydrogen peroxide. The so obtained slurry was mixed for 45 s in the stirrer to promote the formation of inter-expanded slurry (**IES**). Subsequently, the **IES** was placed inside the brick cavity, where the foam was allowed to fully expand until the decomposition of hydrogen peroxide was completed.

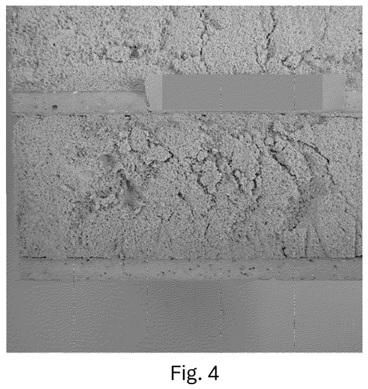

The brick filled with mineral foam was left overnight to allow a proper setting. The next day the brick was cut in half along its cross-section (Fig. 4).

The cavities of Ref-1 and F-1 were filled with the same amount of foam.

In the inventive example F-1, the stirring simulated pumping of step (b) of claim 1.

Fig. 2 shows a clay brick cavity filled with the expanded mineral binder composition using the comparative, non-inventive method. It is evident that due to the high water absorption rate of the clay, there was not enough water in the aqueous slurry to complete the foaming process.

Fig. 3 shows a clay brick cavity filled with a pre-cut, hardened, and dried piece of expanded mineral binder composition, sized to fit the cavity. The photo, which shows the cavity cut along its cross-section, reveals a continuous gap of 0.5-1 mm between the wall of the clay brick and the expanded mineral binder composition.

Fig. 4 shows a clay brick cavity filled with the expanded mineral binder composition according to the method of the present invention. In this case, the brick cavity is fully filled, without any signs of cracking or detachment from the brick. Complete cavity filling is essential for maximizing thermal efficiency and preventing heat loss by eliminating thermal bridges. It also minimizes moisture accumulation, reducing the risk of condensation, mold, and material degradation. Fully filled cavities enhance structural stability and improve sound insulation. Overall, complete cavity filling ensures consistent thermal, mechanical, and acoustic performance, contributing to the durability and efficiency of the structure.

## Claims

1. A method for filling cavities (8) in water-absorbing materials with an expanded mineral binder composition or for filling cavities (8) in non-water-absorbing materials where the cavity (8) is oriented non-horizontally with an expanded mineral binder composition, said method comprising the steps of:
a) Providing an aqueous slurry (2) comprising at least one mineral binder and at least one expansion agent;
b) Pumping the aqueous slurry (2) of step (a) through at least one hose (7), whereby expansion occurs and an inter-expanded slurry **IES** (9) is formed;
c) Filling cavities (8) in the water-absorbing material or in the non-water-absorbing material where the cavity (8) is oriented non-horizontally with the **IES** (9);
d) Allowing the **IES** (9) to fully expand and optionally to harden inside the cavities (8) to form the expanded mineral binder composition;
wherein the **IES** (9) in step (b) expands to between 50 and 95%, preferably between 70 and 85%, of the total volume of the expanded mineral binder composition.

2. A method for insulating a non-horizontally oriented structure with an expanded mineral binder composition, said method comprising the steps of:
a) Providing an aqueous slurry comprising at least one mineral binder and at least one expansion agent;
b) Pumping the aqueous slurry of step (a) through at least one hose, whereby expansion occurs and an inter-expanded slurry **IES** is formed;
c) Applying the **IES** onto a non-horizontally oriented structure;
d) Allowing the **IES** to fully expand and optionally to harden on the non-horizontally oriented structure to form the expanded mineral binder composition;
wherein the **IES** in step (b) expands to between 50 and 95%, preferably between 70 and 85%, of the total volume of the expanded mineral binder composition.

3. The method according to claim 1, wherein the water-absorbing materials are **characterized by** water absorption of at least 10%, preferably at least 15%, most preferably at least 20%, determined according to DIN EN 772-7:1998.

4. The method according to claim 1 or 3, wherein the water-absorbing materials are selected from clay bricks, hollow concrete blocks, porous ceramic blocks, aerated concrete and/or natural stone blocks.

5. The method according to any of the preceding claims, wherein the degree of expansion is controlled by a pump rate of the **IES,** a total volume of the adherent tubes, and optionally of a homogenization chamber, and/or the amount of a catalyst.

6. The method according to any of the preceding claims additionally comprising a step (a.1) between the steps (a) and (b), wherein the step (a.1) comprises mixing the slurry of step (a) inside a homogenization chamber to obtain a pre-expanded slurry **PES,** wherein the **PES** reaches at least 10%, preferably at least 30%, of the total volume of the expanded mineral binder composition, and wherein the **PES** has a lower expansion than the **IES.**

7. The method according to any of the preceding claims, wherein the mixing of the aqueous slurry is done in a colloidal mixer, a static mixer, a pan mixer, a drum mixer, and/or a planetary mixer, preferably in a colloidal mixer.

8. The method according to any of the preceding claims, wherein the slurry comprises an expansion agent selected from hydrogen peroxide, aluminium powder, a solution of alkaline peroxide, a solution of organic peroxide, preferably hydrogen peroxide.

9. The method according to any of the preceding claims, wherein the slurry comprises a catalyst selected from manganese dioxide, iron oxides, cobalt oxides, nickel oxides, copper oxides, iron (III) chloride, preferably manganese dioxide.

10. The method according to any of the preceding claims, wherein the mineral binder comprises calcium sulfoaluminate cement.

11. The method according to any of the preceding claims, wherein the pumping speed is between 0.1 and 50 dm³/min, preferably between 0.5 and 5 dm³/min.

12. A material having at least one filled cavity, wherein the at least one filled cavity is obtainable by the method according to any of the preceding claims.

13. The material according to claim 12, wherein the at least one cavity is completely filled with the fully expanded and hardened mineral binder composition of the step (d) of claim 1 or claim 2.

14. The material according to claim 13, wherein the dry density of the expanded and hardened mineral binder composition is between 20 to 200 g/m³, preferably between 30 to 150 g/m³, most preferably between 40 to 60 g/m³.

15. A use of a building material with filled cavities obtained by a method as claimed in any of the claims 1 - 11 for thermal insulation, acoustic insulation, sound absorption, fire protection and/or construction.

16. A device (11) for filling cavities (8) in water-absorbing materials with an expanded mineral binder composition or for filling cavities (8) in non-water-absorbing materials where the cavity (8) is oriented non-horizontally with an expanded mineral binder composition (10) according to the method of any of claims 1 or 3 - 11, comprising a stirrer (1) for an aqueous slurry (2), an expansion agent feeder (4), optionally, a homogenization chamber (6), and at least one hose (7) adapted to transport and apply the aqueous slurry and an inter-expanded slurry **IES** (9) into a cavity, wherein the hose (7) has a volume between 1 and 20 dm³, preferably between 1 and 10 dm³, more preferably 1 and 5 dm³, wherein the volume is determined by the inner diameter of the hose.

17. A device (11) for insulating a non-horizontally oriented structure with an expanded mineral binder composition according to the method of any of claims 2 or 4 - 12, comprising a stirrer (1) for an aqueous slurry (2), an expansion agent feeder (4), optionally, a homogenization chamber (6), and at least one hose (7) adapted to transport the aqueous slurry and an inter-expanded slurry **IES** to the surface of a non-horizontally oriented structure and apply it, for example by spraying, onto the surface of the non-horizontally oriented structure, wherein the hose (7) has a volume between 1 and 20 dm³, preferably between 1 and 10 dm³, more preferably 1 and 5 dm³, wherein the volume is determined by the inner diameter of the hose.
